# EUROPEAN PATENT SPECIFICATION

(11) **EP 1 753 301 B1**
(45) Date of publication and mention of the grant of the patent: **19.05.2010**
(21) Application number: 05707362.9
(22) Date of filing: 14.02.2005
(51) Int. Cl.: A23G 9/28

(54) **METHOD FOR PRODUCING EDIBLE FAT-BASED SHELL FOR CONFECTIONERIES**
VERFAHREN ZUR HERSTELLUNG EINER GENIESSBAREN HÜLLE AUF FETTGRUNDLAGE FÜR SÜSSWAREN
PROCEDE PERMETTANT DE PRODUIRE UNE ENVELOPPE COMESTIBLE A BASE DE MATIERE GRASSE POUR CONFISERIES

(30) Priority: 12.03.2004 US 800222
(43) Date of publication of application: 21.02.2007
(73) Proprietor: Nestec S.A., 1800 Vevey (CH)
(72) Inventor: WOLEVER, Dennis, Scott, Marysville, OH 43040 (US); TALBOT, Michael, Lee, Dublin OH 43017 (US)
(74) Representative: Rossand, Isabelle
(86) International application number: PCT/EP2005/001447
(87) International publication number: WO 2005/094601

(56) References cited:
- EP-A- 1 040 760
- WO-A-02/15706
- WO-A-80/01749
- WO-A-99/45789
- GB-A- 1 017 480

## Description

### FIELD OF INVENTION

The present invention relates to a method for producing an edible fat-based shell for use as an edible receptacle for holding various items, such as confectioneries and preferably frozen confectionery novelties.

### BACKGROUND OF THE INVENTION

Increasingly, there is a consumer demand for composite products formed from different edible materials in complementary combinations. There are different combinations of chocolate shells that contain a different component therein. In addition to chocolate confectioneries, many frozen confectionery products are known. One desirable combination is ice cream and chocolate. There are, however, significant production and packaging difficulties involved in the integration and packaging of these materials in various shapes and sizes to produce interesting new products in a consistent and cost-effective manner.

The existing methods for coating or lining frozen confectionery products with chocolate or other fat-based coatings include dipping, enrobing, spraying, and forming. As is well known in the art, dipping and enrobing are unsuitable for lining the interior of cones and other edible and non-edible forms. Traditionally, ice cream cones were lined with a fat-based coating by spraying them with an atomized mist of fat-based coating (known as the "hollow-cone spray" technique) or with one or more jets of non-atomized coating. To achieve acceptable coverage, however, the fat content of such coating needs to be greater than 40% and is typically 50% or greater. Most real chocolates cannot be used for this process because their fat content is too low and their viscosity too high to properly atomize. Thus, high-fat compound coatings are used in this process, and the high fat content of the coating results in diminished taste quality. The high fat content also causes rapid rundown and results in inconsistent cone thickness, with the walls being thinnest at the top rim of the cone and thickening towards the bottom of the cone, producing a large nugget of chocolate at the tip of the cone.

More recently, the frozen cone (also known as "forming") technology has been used to mold fat-based coating shells inside empty cone sleeves. The frozen cone method consists of a chilled female cone form and a chilled male cone die. Molten chocolate is poured into the female cone form, the male cone die is pressed into the pool of liquid chocolate, and the chocolate hardens into a hollow cone. One of the disadvantages of this technique is that only a few recipes using real chocolate, *i.e*., chocolate made out of cocoa butter, can be used, because of the process necessitates many operational restrictions. Further, the technique can only be used to line a tapered shape, such as a cone shape.

A variation of these techniques involves pouring or spraying molten chocolate into a female mold, and then pouring off the excess such that the residual material hardens around the inner surface of the mold and can be removed as a self-supporting chocolate shell. One of the disadvantages of this technique, however, is its difficulty in regulating precisely how much material adheres to the mold and, hence, the amount of excess material that will be poured off. Thus, it is difficult to predict the rate at which the chocolate will be consumed in the production process as well as the wall thickness and the mass of the finished product. A further problem is that the method often gives rise to a non-uniform wall thickness in the product, due to the pooling of molten chocolate towards the lowermost part of the mold.

GB 1,017,480 discloses a method for spraying a chocolate coating material on the interior surface of a cone or a receptacle using a nozzle with spraying holes. In this method, the nozzle includes a number of spaced holes for spraying the chocolate against the entire inner surface of a cone or a receptacle. One disadvantage of this technique is the inconsistent thickness of the cone that is produced. If a relatively thick cone is desired, the coating material sprayed at the upper part of the cone will inevitably drip down towards the bottom due to gravity, with the resultant cone having a thickness that increases towards the bottom, with the top rim being the thinnest. This dripping causes the tip of the cone to fill with a large nugget of chocolate. For this reason, the cones that are successfully produced are relatively thin to avoid this pooling of chocolate in the tip of the cone.

Another disadvantage of the existing chocolate-cone making technology is that it can be used to make only flat-top cones. With flat-top cones, the chocolate cone is made inside a packaging sleeve, but the chocolate does not cover the entire inner surface of the sleeve because it is technically difficult to coat the entire inner surface of the sleeve without having the coating material overflow the upper rim of the packaging sleeve. Hence, the uppermost part of the sleeve is left uncoated, and removing the packaging sleeve exposes a naked mass of ice cream over the cone.

Accordingly, what is needed is a method for producing a shell of uniform thickness from any of a wide variety of materials that can be formed into an edible receptacle for use in supporting or carrying other edible items or components. In addition, a method for coating the entire inner surface of a packaging sleeve with an edible coating material is desired. The present invention addresses these problems of the prior art by providing a novel technique that can handle various low-fat and high-fat coating materials and produce products of any shape with consistent thickness.

### SUMMARY OF THE INVENTION

The present invention relates to a method for producing an edible fat-based shall, which comprises preparing a packaging support in a desired shape that defines a volume therein; and directly showering or pouring an amount of an edible shell-forming composition on the packaging support, which composition solidifies to form a shell of consistent thickness thereon, with the composition comprising one or more fats and having a plastic viscosity of about 1 to 4 Pa·s (10 to 40 Poise) and a yield value of about 5 to 25 Pa (50 to 250 dynes/cm²) during the showering or pouring. The shell is formed from an amount of shell-forming composition that is equivalent to what is required for formation of the shell, thus rendering the method highly efficient for producing such shells. Advantageously, the composition is showered from a plurality of streams onto the packaging support.

The shell may have the shape of a cup, cone, or other open top receptacle and may be partially or completed filled with a filling. The filling may be a confectionery or an ice confection, such as ice cream, frozen yogurt, sherbet, or water ice, and may be present in an amount that extends beyond the open top of the shell so as to be provided as an exposed mass for easy consumption.

The shell-forming composition may further comprise an emulsifier, such as lecithin, ammonium phosphatide, polyglyceryl polyricinoleate, or citric acid ester of mono-glyceride, in an amount of no more than 1% by weight of the composition, and a sweetener, such as sugar, dried honey, corn syrup solids, lactose, anhydrous dextrose, malitol, xylitol, lactitol, mannitol, polydextrose, acesulfame K, sucralose, or aspartame.

The packaging support and shell may each be formed as a cone in the present method, and the shell may be formed with an irregular top rim. In an embodiment, the shell is formed with an angled, offset or crenelated top rim. Inclusions such as nuts, cookie crumbs, cereal, fruit pieces, chocolate chips, candy pieces or coconut may be provided on an inner surface of the shell, and a cake or wafer cone may be embedded within the fat-based shell. The packaging support may be made of a non-absorptive food grade material comprising paper, foil, transparent, translucent or non-transparent plastic, or a laminate thereof.

The shell-forming composition may be showered from a plurality of streams onto the packaging support. The plurality of streams may be arranged to provide a uniform top rim of the shell which is essentially horizontal or essentially uniformly crenelated, or may be uniformly arranged about an imaginary vertical center line of the shell. Alternatively, at least one of the plurality of streams may be offset from the imaginary vertical center line of the shell so a non-uniform top rim of the shell is provided. The non-uniform top rim may be angled, slanted, or double slanted.

In an embodiment, the shell may have vertical bands of different or contrasting colors. The shell may be formed with patterns or speckles on its outer surface for visual effect. The shell may further include particulate inclusions on an inner surface.

The present invention also relates to spraying the shell-forming composition onto the packaging support wile the support is held in a downwardly open position. According to this inverted shower process, the open end of the packaging support and shell may further be dipped into a supply of liquid fat-based material such as liquid chocolate or caramel to provide a coating on the top rim of the support and shell. The shell rim dipped in the liquid fat-based material may then be dipped into a supply of ground nuts, cookie crumbs, cereal, fruit pieces, chocolate chips, candy pieces or coconut.

The present invention also relates to an apparatus for producing an edible fat-based shell, comprising a packaging support in a desired shape that defines a volume therein; a nozzle having multiple holes for showering an edible shell-forming composition of the type described herein onto the packaging support wherein the composition solidifies to form a shell; and a positioning device for arranging the nozzle and packaging support in an operative position for properly showering the composition onto the packaging support.

In this apparatus, the nozzle is preferably operated to dispense an amount of shell-forming composition that is equivalent to what is required for formation of the shell, and the packaging support advantageously has the shape of a cup, cone, or other open top receptacle and the shell conforms to the shape of the support. The holes may be placed in the nozzle to provide streams that are angled at less than 90 degrees against the packaging sleeve and preferably by angling the holes in the nozzle by about 20 to 35 degrees.

The apparatus may include a nozzle mounting assembly to align the nozzle with an imaginary vertical center line of the shell to direct the plurality of streams in a uniform arrangement onto the shell and provide a uniform top rim of the shell. Alternatively, the nozzle mounting assembly can align the nozzle in an offset position from the imaginary vertical center line of the shell to direct the plurality of streams in a non-uniform arrangement onto the shell and provide a non-uniform top rim of the shell which is angled, slanted, or double slanted.

The apparatus may also include means for holding the packaging support in a downwardly open position while the shell-forming composition is sprayed into the packaging support. Also, the apparatus can include a reservoir for holding a supply of a fat-based liquid material and means for dipping the open end of the packaging support and shell into the fat-based liquid material to provide a coating on the top rim of the support and shell.

The edible fat-based shells that are formed by the method and apparatus of the invention represent another embodiment. These shells comprise a packaging support having a desired shape that defines a volume therein; and one or more walls of consistent thickness that are formed directly on the packaging support from an amount of an edible shell-forming composition of the types disclosed herein. The walls of the edible fat-based shell preferably have the shape of a cup, cone, or other open top receptacle and a filling is at least partially retained within therein. The filling is typically ice cream of a confectionery material. Prior to consuming the product, the packaging support is removed.

### BRIEF DESCRIPTION OF THE DRAWINGS

Preferred embodiments of the invention will now be described, by way of example only, with reference to the accompanying drawings in which:
Figure 1 is a cross-sectional view of a nozzle projecting the coating composition to form a crenelated cone-shaped shell;
Figures 2A-2B are examples of crenelated cones formed by the shower method;
Figure 2C is a comparative example of a cone made by a conventional forming method;
Figure 3A is an illustration of the shower method where the nozzle is placed at the imaginary vertical center line through the packaging support;
Figures 3B-3C are illustrations of the shower method where the nozzle is placed offset from the imaginary vertical center line through the packaging support;
Figures 4A-4B are examples of cones formed by the shower method, decorated with lines or speckles before showering;
Figure 5 is a cross-sectional view of an inverted shower nozzle projecting the coating composition onto an inverted cone-shaped packaging sleeve;
Figure 6A is a cross-sectional view of a flat-top ice cream cone; and
Figure 6B is a cross-sectional view of a ball-top ice cream cone prepared by the inverted shower method.

### DETAILED DESCRIPTION OF THE PREFERRED EMBODIMENTS

The present invention provides a novel edible fat-based shell that can be filled with a food such as frozen or non-frozen confections. In particular, the present invention relates to producing frozen confectionery products coated with uniformly thick coating that is made of various recipes of coating materials, and provides a useful and cost-effective alternative to the conventional edible receptacle-forming processes.

The novel "shower" or "shower cone" technology of the present invention allows the use of both low-viscosity materials with high fat contents and high-viscosity materials including real chocolate and other low-fat coatings, and therefore can handle various recipes of real chocolate as well as a wide range of different types of compound coating. The chocolate used in the coating composition may be ordinary or real chocolate according to accepted regulations, or it may be a fat-containing confectionery compound material containing sugar, milk-derived components, and fat and solids from vegetable or cocoa sources in differing proportions. The fat-containing material may be a chocolate substitute containing cocoa butter replacements, stearines, coconut oil, palm oil, butter or any mixture thereof; nut pastes such as peanut butter and fat; praline; confectioner's coatings used for covering cakes usually comprising chocolate analogues with cocoa butter replaced by a cheaper non-tempering fat; or "Caramac" sold by Nestle comprising non-cocoa butter fats, sugar and milk. In addition, these coating materials can be applied by a pouring technique with similar results. Showering with a nozzle is preferred for optimum control over the application of the coating material.

By allowing the use of various shell-forming compositions, from high-fat to low-fat, the present shower technology satisfies the consumer demand for composite frozen confectionery products formed from different material and having varied flavors. Further, since the process can be operated at ambient temperatures, the resultant frozen confectionery products may be slightly softer, with more desirable texture and flavor qualities, than those produced by the conventional forming process, as the warmer operating temperature affects the crystallization of the chocolate or other compound coating.

Because the shower technique involves showering an inside surface of a hollow object using a nozzle, it can be used to apply coating on a surface of any shape. When directly applied to protective wrapper or packaging sleeve, production efficiency is improved and damage and contamination of the exposed product prior to wrapping is prevented.

Another important advantage of the shower technology is the reduced capital and operating costs. The present process is more efficient and cost-effective because it can operate at ambient temperatures and does not require chilled equipment. The brine systems and the air-dehumidification equipment, required for the forming process, may also be eliminated. The decreased manufacturing complexity and cost-effectiveness of the present process would allow the production of flavorful and varied frozen confectionery products by those who would not have been able to afford the conventional technology.

In the following description, "low fat" or "lower fat" in a coating material refers to a fat content of 38% or less. The term "compound coating" refers to a coating based on fats other than cocoa butter, including milk fat and vegetable fats such as coconut oil, palm kernel oil, soybean oil, or a blend of such oils. The term "rundown" is used to describe the amount of coating material that runs down to the bottom of the shell before it is set by being filled with ice confectionery. The terms "packaging sleeve" and "packaging support" are used interchangeably. The term "flat-top cone" is used to describe a cone or shell for which the coating material does not cover the entire inner surface of the packaging support or sleeve. The top of the confectionery filling in a flat-top cone may not be flat, but it does not extend above the upper rim of the packaging sleeve, and a lid is placed on top of the sleeve to cover the product completely. The term "ball-top cone" describes a cone or shell whose packaging support or sleeve is completely covered with the coating material on the inside. The confectionery filling on top of a ball-top cone may or may not be ball-shaped, but it usually extends above the upper rim of the cone.

The present invention is preferably used for producing frozen novelties and confectionery products that are lined with chocolate or compound coatings. The novel showering technology is used to prepare a shell from any of a wide variety of coating materials, including real chocolate or other lower-fat or high-fat compound coatings. By using a nozzle with multiple, angled holes placed around its rim, the coating composition can be showered in discrete streams, and the angle and the size of the nozzle may be adjusted to achieve the desired coating effect. Showering with streams of coating material from the nozzle also results in a unique appearance, such as a cone with a distinctive crenelation at its top rim.

Although a cone-shaped shell is most often described by way of example, it will be appreciated that the invention embraces various shapes of hollow shells, including the shapes of a bowl, a cup, a ball, a cylinder, a pyramid, a frustum, a flower, and an animal. Similarly, while chocolate coating is used as an example, any type of compound coating may be used. Also, when ice cream is mentioned for use as a filling, any other ice or frozen confectionery filling materials, such as frozen yogurt, sorbet, or water ice may be used. Thus, the skilled artisan has a wide variety of combinations available for creating filled shell confection novelties.

One aspect of the present invention relates to forming a shell with chocolate or compound coating to hold ice cream or other frozen confectionery materials. The shell may be formed inside a packaging sleeve, replacing the traditional wafer cone, or may be formed inside a wafer cone or other edible surfaces. The packaging support may be made of a non-absorptive food grade material such as paper, foil, transparent, translucent or non-transparent plastic, or a laminate thereof. The coating composition may be based on various edible materials, including cocoa butter and vegetable fats. If the shell-forming composition is low in fat, containing 38% or less fat, a better-tasting shell is obtained, and this is desirable for certain final products.

The flexibility of the present shower technique is seen from the range of coating recipes that can be used with the process. Whereas the conventional "forming" process requires a strict control of such factors as the particle size and the amounts of total fat, free milk fat and lecithin, the factors need not be as strictly controlled in the present process, which therefore allows accommodation of more varied recipes.

For example, the total amount of free milk fat is not as important in the shower process as in the conventional methods. In fact, the relative amount of free milk fat does not at all affect the shower process, and it is possible to use a coating made with a fat phase containing 100% milk fat. The amount of total fat is another distinguishing factor. The total fat content includes the fat content of all the components that contain fat, including milk powder, cocoa powder and cocoa liquor, lecithin, and any other ingredients that are 100% oil or fat. Using no more than 38% total fat would produce desirable shell thickness, but 50% by weight or more of the fat may be used if the showering is performed at a slightly lower temperature or the amount of rundown is otherwise controlled. The invention thus enables the use of low-fat coating materials but also allows higher-fat coating materials to be used. The amount of total fat, however, may preferably be limited to 38% to enhance the flavor of the product, as a lower fat content results in better tasting products.

Moreover, in contrast to the forming process, in which only real chocolate made from cocoa butter can be used, the showering process enables the use of coatings made from vegetable fats such as coconut oil, palm kernel oil or soybean oil, or a blend of such oils. The range of possible coating materials that can be used with the present process, from low-fat to high-fat and from cocoa butter to vegetable fat, also evidences a significant improvement over the hollow-cone spray technique, which can only process atomized high-fat coating materials.

The amount of the emulsifier is important for achieving optimum showering of the coating. The emulsifier is used to reduce the viscosity and/or yield value of the composition. Since the emulsifier speeds up rundown, the total amount of the emulsifier should preferably be limited to around 1%. The emulsifier may comprise lecithin, ammonium phosphatide, polyglyceryl polyricinoleate (PGPR), or citric acid ester of mono-glycerides, and is preferably added to the coating composition before it passes through the nozzle. One or more emulsifiers can be used in a preferred amount of about 0.05 to 0.65% by weight of the composition.

The composition may also comprise a natural or artificial sweetener. For example, sugar or dried honey, corn syrup solids, lactose, or anhydrous dextrose may be used for the sweetener, or an artificial sweetener such as malitol, xylitol, lactitol, mannitol, or polydextrose may be used. The sweetener also may be a high-intensity sweetener such as acesulfame K, sucralose, or aspartame. When used, the sweetener is present in the composition in an amount of about 25 to 60% by weight. Examples 1 to 3 provide further illustration of preferred compositions by providing two recipes that can be used to make shower cones.

The shower method is adapted for continuous multiple operation, and can be applied in a production line. The line is indexed, and includes a number of stations and an automated conveyer that transports packaging sleeves. The line pauses at each station before proceeding to the next. Initially, packaging sleeves move past a station where the nozzle showers molten chocolate or other compound coating material into the sleeve. The line then proceeds to another station where the shell is filled with a filling.

In one preferred embodiment, a chocolate volumetric dosing device that includes a nozzle delivers chocolate coating material at the desired production output. This device may include a lifting station for moving nozzles or packaging sleeves.

The production line may be assembled such that either the nozzle or the shell packaging sleeve moves along the production line. In one example, the nozzle is stationary and the sleeve moves to the nozzle to be showered. In another example, the sleeve is stationary and the nozzle moves down to the sleeve to shower at a desired height for the desired shell size. Ice cream cone production lines generally have lift stations such that the nozzle can move down into the packaging sleeve to pour or shower the chocolate. With the present technique, such lift stations may be used if equipment is available, or, alternatively, a sleeve lift station for lifting the sleeve to the nozzle may be used.

The shower nozzle in the device can be easily modified to adapt to different types of shell-forming equipment. Further, the equipment may be set for a nozzle having holes at a specific angle, so that the same nozzle can be used without requiring height or setting adjustments.

In a further embodiment of the invention, the coating composition does not flow from the shower nozzle in a continuous stream, but the amount of the composition being showered through the nozzle is metered so as to prevent dripping of the composition from the nozzle between successive shower applications. A volumetric coating metering device may be used, and a short "suck-back" step may be incorporated at the end of each showering to further prevent any small drips. This enables the nozzle to be operated to dispense an amount of shell forming composition that is precisely equivalent to what is required for formation of the shell. As no excess coating material is dispensed, the wall thickness of the shell is provided with a controlled thickness. This means that wall thickness at the bottom of the one is not more than 200% of that at the top of the cone and is at least 1 mm to about 6 mm at the top of the cone.

A mini cone of about 30 ml can be made with one nozzle depositing about 6 to 15 grams of the coating composition at a time, while a larger cone of about 120 ml may be made by two successive showers with two depositors. For example, where each depositor showers about 6 to 15 grams of the coating composition, a larger shell of about 14 to 22 grams can be made by the double shower process, in which two successive showers are applied.

The invention provides a coating composition that has preferred flow properties for being dispensed by the nozzle in a showering or pouring mode. Achieving the right flow properties, such as plastic viscosity and yield value, at the application temperature is important for properly forming a shell, because the coating composition is projected onto the uppermost part of the packaging sleeve during the shower process and must drip downward to form a shell. If the composition is too thick and too viscous, there will be insufficient rundown and uneven coating coverage, and may even result in windows or tears on the shell. A composition that is too thin, on the other hand, will lead to too much rundown and thin, crumbling walls. A composition with the right degree of viscosity will run evenly down the walls of the wrapper before it is filled with a frozen confection.

For optimum flow properties, the shell-forming composition should have a plastic viscosity of about 1-4 Pascal seconds (10-40 Poise) and a yield value of about 5-25 Pascals (50-250 dynes per square centimeter) at the temperature the composition is showered. Such flow properties will allow the coating composition to drip downward at a desirable speed after being showered onto the packaging sleeve, such that a uniformly thick shell in the desired shape is formed. Viscosity and yield values can be calculated from multiple torque readings taken with a Brookfield RV viscometer with SC4-28 spindle, using the modified Casson equation for chocolate viscometry.

Since the coating composition is showered through the holes in the shower nozzle, the composition particle size should be small enough to pass through the holes. Blockage or clogging of the hole may occur if me coating composition contains a particle larger than the hole diameter. Clogging may also be caused when a significant number of particles are larger than one third of the diameter of the hole, because the particles may bridge together to cause blockage. Filtering the coating composition prior to showering will prevent such clogging. When the showering process is stopped, removing and cleaning the nozzle will also help prevent clogging of the holes.

In a preferred example of the invention, the particle size of the composition is about 50 microns or less for a nozzle hole with a diameter of about 1 mm. Small particle sizes are also preferred because larger particle sizes may increase rundown and cause the shell to taste coarse.

To further prevent clogging the nozzle holes, the coating composition should preferably be showered above the melting point of its principal fats (the "set point" of the composition). If the composition is allowed to fall below the set point of the composition, lumps of solid coating may form and block the nozzle holes. The coating composition should therefore preferably be showered and maintained at a temperature higher than its set point in order to prevent such blockage. For example, the shower process is preferably conducted at around 42°C to 48°C, and more preferably at around 45°C, for a coating composition made of real milk chocolate. If fats with lower melting points are used, the showering temperature can also be adjusted appropriately. In another example, showering can be done at about 32 to 38°C, and more preferably at about 35°C, when the composition's principal fats include coconut oil. However, unlike the conventional forming process which requires very strict temperature restrictions, the exact processing temperature is not as critical as long as it is maintained above the set point of the composition.

One inventive feature of the present invention is its use of shower nozzles with orifices or holes placed around the rim of the nozzle. As the holes are placed along the rim of the nozzle and not at its center, the composition, when projected against a surface, will form a band on the surface corresponding to the rim of the nozzle. Thereafter, the showered composition will flow down and towards the center and converge, such that a closed shell is formed. During this process, providing the composition with proper flow properties is critical for forming a shell with desired and uniform thickness.

In one embodiment, the nozzle is set up at a diameter of 1.7 cm (0.65 inches) and with twenty with twenty to twenty-four holes. For such nozzle, the holes may preferably be about 0.7cm (0.04 inches) in diameter. The diameter of the hole may be increased without changing the composition's flow properties so that any nozzle blockage is eliminated. In another preferred embodiment, a larger nozzle, with around 48 holes, can be used to make a large cone having a capacity of about 120 ml. Using a larger nozzle will result in a more even appearance at the top of the cone.

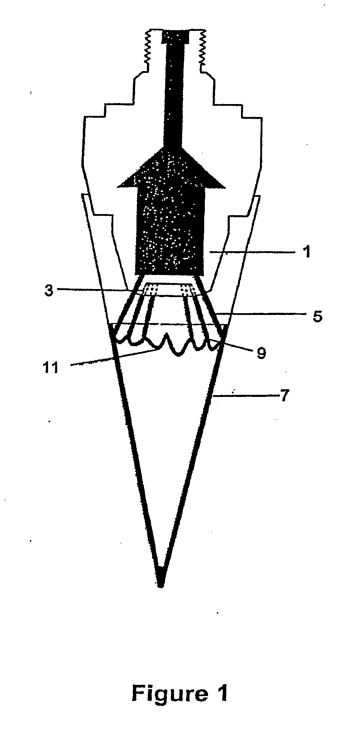

Another benefit of using a nozzle with multiple holes or orifices is that the resulting shell has a very distinctive and unique appearance. As shown in Figure 1, when the chocolate coating material is projected in discrete streams 5 from the holes 3 of a nozzle 1 and deposited on the interior walls of a packaging sleeve or a form, the chocolate material solidifies as it gradually accumulates under each hole, thus forming a mound under each hole. The result is a non-uniform top rim, with a distinctive pattern that can be characterized as "crenelation." For example, referring again to Figure 1, when a shower nozzle with twenty-four holes 3 is used, the chocolate accumulates under each of the twenty-four holes 3, and the produced cone 7 has twenty-four "peaks and valleys" at the top rim, with each peak 9 being the chocolate accumulating under the hole 3 and each valley 11 being the area between two adjacent holes, where the chocolate streams merge.

In a preferred embodiment, the invention relates to a composite frozen confectionery item that comprises a packaging support, a shell and a filling that is at least partially supported by the shell. The shell has a consistent thickness and is formed directly on the support from an edible shell-forming composition that comprises a fat, an emulsifier, and a sweetener. The shell-forming composition advantageously has a plastic viscosity of about 1 to 4 Pa · s (10 to 40 Poise) and a yield value of about 5 to 25 Pa (50 to 250 dynes/cm²) to obtain desirable preferred flow properties. The shell preferably has the shape of a cone, and the top rim of the cone may be crenelated to provide a visually distinctive pattern.

The filling, which may be any confection but preferably comprises an ice confection such as ice cream, frozen yogurt, sherbet, or water ice may partially fill, completely fill or even overfill the shell. For the latter, a mass is exposed outside of the shell. Preferably, the filling may extend beyond cone rim and be exposed on top of the cone for easy consumption.

In another preferred embodiment of the invention, the shell may include on its inner surface edible inclusions, such as ground nuts, cookie crumbs, cereal, fruit pieces, chocolate chips, candy pieces or coconut.

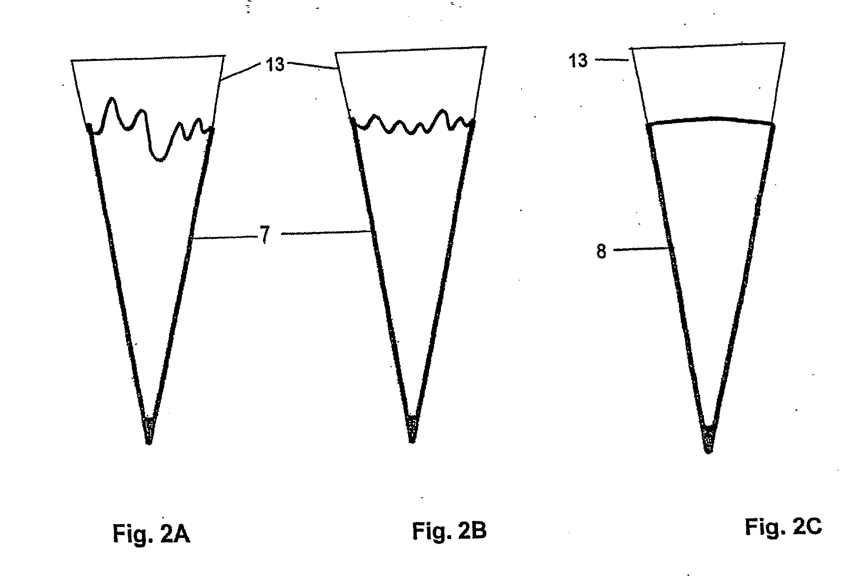

Both conventional rim and crenelated cones can be formed according to the present invention by the appropriate alignment of the nozzle holes. Figures 2A and 2B provide further illustration of such crenelated cones 7, filled with an ice confection 13, made by the shower process. A cone 8 made by the forming process is shown in Figure 2C for comparison.

In a further advantageous embodiment, the holes may be angled at different degrees to achieve different showering effects. A nozzle may have holes facing straight down such that the coating composition is showered at 90 degrees against the packaging sleeve, or the holes may be placed such that the coating composition is showered at less than 90 degrees against the packaging sleeve. As each hole projects a predetermined amount of molten coating composition onto the packaging sleeve, a nozzle with holes facing 27 degrees up from the downward (90-degree) position would achieve a wider shower coverage, while a nozzle with holes removed from the downward position by 22 degrees would provide a relatively more concentrated coverage of a narrower area. In most cases, the nozzle includes no holes that direct the coating composition directly into the tip or lower portions of the cone, since this could lead to the formation of a pool of coating material in the tip which eventually forms a plug therein.

In one preferred embodiment, a 27-degree nozzle, *i.e*., a nozzle whose holes are angled at 27 degrees from the 90-degree position, with twenty-four holes is used to make a mini cone of about 30 ml, having a height of about 100 mm and a diameter of about 35 mm at the top rim. A mini cone made with the 27-degree nozzle will have a distinctive "crenelation" of a crown shape at its top edge. A 27-degree nozzle or a 22-degree nozzle can also be used to make a larger cone of about 120 ml with a height of about 170 mm. The crenelation at the top rim of a larger cone may be more pronounced, with each cone having its own unique pattern.

The nozzle angle can be changed to accomplish complete and uniform coating of the desired size cones. This effect may also be accomplished by adjusting the lift station to lift and properly position the cone sleeve. Changing the angle of the nozzle hole for the particular product results in less manufacturing downtime. The showering of the coating material near the top of the cone enables the coating material to form the cone by flowing down the sleeve or mold into which the coating is showered.

In addition to adjusting the showering angle, the showering pressure may also be adjusted to achieve the desired shower effect. In one embodiment, a pressure of about 1-2 bar may be applied on the depositor making mini cones of about 30 ml.

The shower process may be repeated such that the packaging sleeve is showered two or more times with the same or different amount of the coating material. By adjusting the nozzle angles and showering height, such multiple shower processes are used to produce larger shells. It will also be appreciated that additional layers of the shell may be built up sequentially by repeating the showering steps. The subsequent layers may be formed from the same coating material, or from a different coating material. Furthermore, a cake or wafer cone may be embedded within a cone-shaped shell by adding the cone in between successive shower applications.

Further, a novel shell with vertical lines of contrasting colors and/or flavors may be created with the present shower process. A shell with vertical lines of one or more contrasting colors or shades may be created by applying two or more showers successively using chocolate or vegetable fat-based compound coatings of contrasting shades or colors and/or flavors. The radial placement of the shower nozzles is an advantageous feature of the invention in forming such shells.

In one embodiment, a first shower applies a number of small individual coating deposits onto the inside of the packaging sleeve, separated by spaces. For instance, when 6 grams of coating material is showered through a nozzle with 12 holes, 12 coating deposits of 0.5 grams each will result in a radial pattern around the inside of the sleeve. A second shower is then applied to deposit the coating material in the spaces formed between the deposits of the first shower. If there is a third shower, the third shower will deposit the coating material in the spaces formed between deposits from the first and second showers. This shower process can be repeated as long as there are spaces between coating material deposits that are not coated. A deposit should not be applied on top of a coating deposit already placed by an earlier shower application. The deposits thus applied run down to the bottom of the packaging sleeve by gravity, creating a shell composed of alternating vertical bands of different coatings and therefore of contrasting colors and/or flavors.

A shell with vertical contrasting colors/flavors can also be created with only one shower according to the present invention. In this embodiment, the shower nozzle is designed such that a shower of two or more different shades, colors or flavors of coatings (for example, coating A and coating B) may be dispensed simultaneously. By means of carefully designed internal cavity, some of the holes in the nozzle are supplied with coating A while the other holes are supplied with nozzle B. In particular, the holes supplied with coating A would be alternated with those supplied with coating B. When showering is performed, deposits of coatings A and B are applied simultaneously and run down to the bottom of the packaging sleeve, forming a shell with alternating vertical bands of coating A and coating B.

Such vertical patterning may be used to alter the visual appeal of a chocolate or compound shell, and can enhance the attractiveness of confectioneries made with a shell.

In another embodiment of the invention, the nozzle may be placed acentrically and/or at an angle from an imaginary vertical center line through the packaging support, rather than being placed along the imaginary vertical center line. Adjusting the orientation or placement of the nozzle in such manner will enable application of one or more showers of the coating material at an angle to the upper edge of the packaging support and create a shell with an angled or slanted rim, such that the shell has a greater height at one side. When more than one nozzle is employed, successive showers may be applied from the identical nozzle position or orientation relative to the packaging support to create a shell with angled or slanted rim. Alternatively, successive showers may be applied at different nozzle placements or orientations such that a shell with two or more peaks (with "double-slanted" or "multiple-slanted" rim) is created. In a further elaboration, successive showers may apply coating materials of different color, shade or texture in order to create a shell composed of visually and/or texturally contrasting parts.

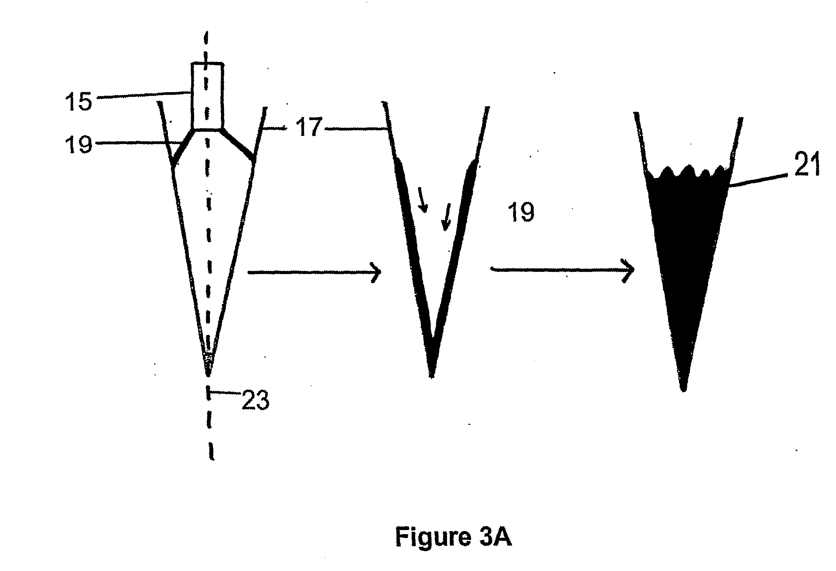

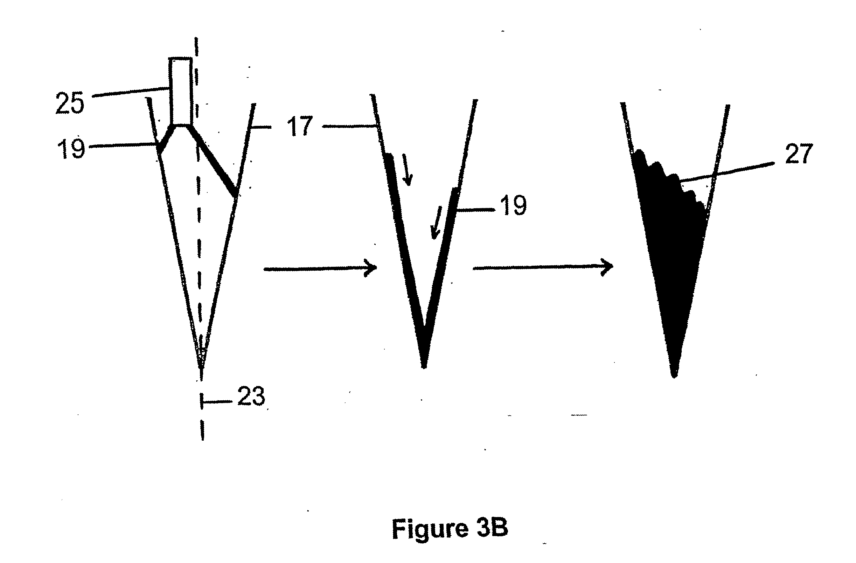

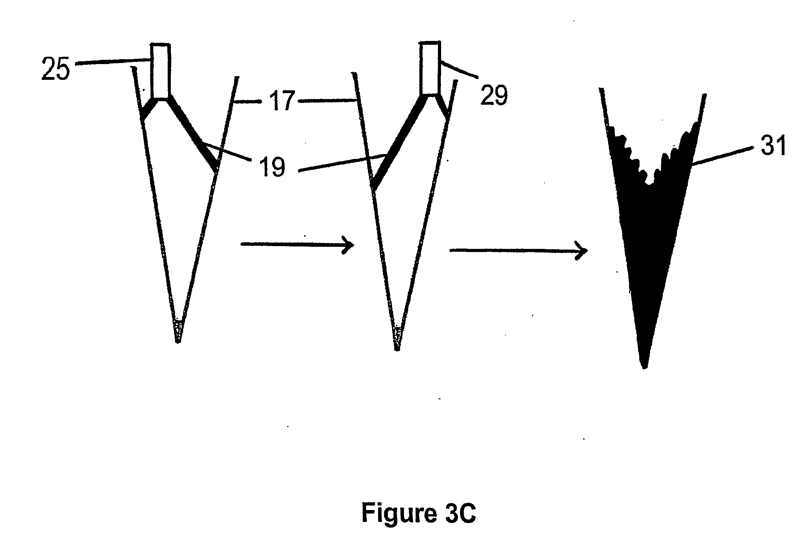

Figures 3A-3C illustrate and compare the showering process with different nozzle positions. In Figure 3A, the shower nozzle 15 is centrally placed against the packaging 17, along the imaginary vertical center line 23, when projecting streams of the coating material 19 such that the finished cone has a horizontal, crenelated top rim 21. In Figure 3B, the nozzle 25 is offset from the imaginary vertical center line 23 to create a cone with slanted top rim 27. Where the coating material 19 is applied successively with nozzles 25, 29 placed at different acentric positions, as shown in Figure 3C, a double-slanted rim 31 is created. Thus, by adjusting the nozzle hole angle and the nozzle position and/or orientation, cones and shells of different shapes, patterns and crenelations can be created.

The present invention also provides for adding particulate inclusions such as ground nuts or candy pieces into chocolate or compound cones or shells in a conventional way. Although particulate inclusions should not be added during the downward showering process (as opposed to the inverted shower process) because the particulate may block the small holes in the shower nozzle, they can be added afterwards to the inside wall of the shell. They can be sprinkled or otherwise directed into the shell by gravity or by a mechanical device that imparts a velocity and movement direction to the inclusions. They may also be added in between two successive shower applications. As the following Examples 6 and 7 explain, a number of different particulate materials may be introduced into the chocolate or compound cone, including ground nuts, cereals, crisped rice, cookie fmes, pieces of candy, chocolate, confectionery sprinkles, compound chips or chunks, fruit pieces, and coconut.

It will be appreciated that the particulate inclusion method can be applied in combination with different cone-forming processes, as long as the chocolate or compound coating remains sufficiently soft or sticky that the particulates will adhere to it. Thus, the above method of particulate inclusion can be used to alter or improve the textural, nutritional or flavor properties of confectionery products, introducing more variety and enhancing the consumer appeal of confectioneries.

Further, the chocolate or compound shell of the present invention may be decorated with lines, speckles or other patterns of chocolate or vegetable fat-based compound material of contrasting color, shade and/or flavor. The decorative pattern is applied to the inner surface of the packaging sleeve before the shell is formed.

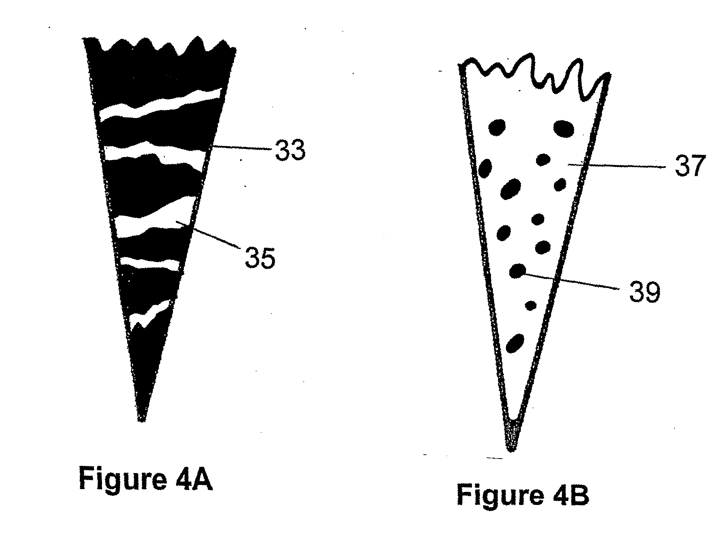

For example, a white chocolate coating material may be first applied onto an inner wall of the packaging sleeve to form irregular lines or patterns, and then milk chocolate coating material may be showered onto the sleeve. Removal of the sleeve would reveal a milk chocolate shell with white chocolate decorative patterns. In another example, a dark cocoa flavored vegetable fat-based compound coating may be applied onto an inner wall of the packaging sleeve such that dark brown speckles are formed on the sleeve. The sleeve is then showered with white compound coating material to form a white shell decorated with dark brown speckles. Examples of such decorated shells are shown in Figures 4A and 4B. Figure 4A shows a milk chocolate cone 33 with white chocolate lines 35, and Figure 4B shows a white compound cone 37 with dark brown speckles 39.

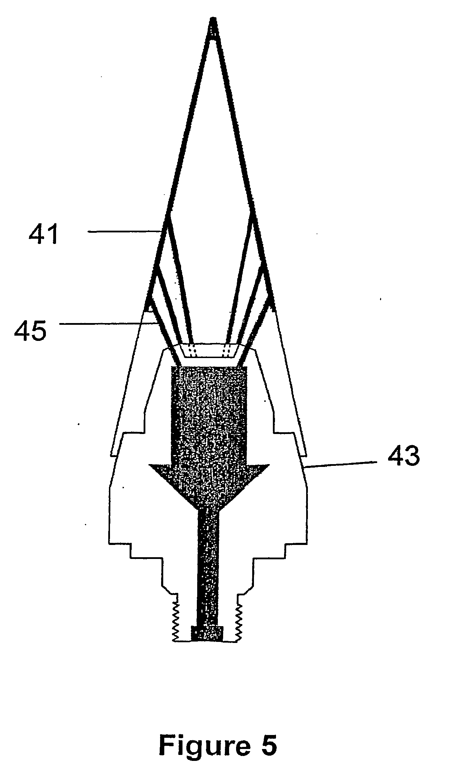

It will be appreciated that such shell decorating method can be applied in combination with different cone-forming processes. Hence, this method of decorating a shell with chocolate or compound coating material can be used to alter or improve visual or flavor properties of various confectionery products. Furthermore, particulate inclusions may also be introduced to decorated shells, enabling a wide range of confectioneries with varied visual, nutritional and flavor appeal. In another embodiment of the invention, a shell or cone may be made by the inverted shower process. During the inverted shower process, the packaging sleeve 41 is held upside down as shown in Figure 5, with the opening of the sleeve facing down and the pointed tip at the uppermost position, and the inside surface of the packaging sleeve is coated from beneath by means of an inverted nozzle 43, which projects streams of coating material 45 upward. The same or a different coating material may be applied successively to make a thicker shell or a shell with contrasting color or textural patterns. After the inverted packaging sleeve is showered and the excess coating material is run down out of the sleeve, the packaging sleeve is turned over, with the closed end of the sleeve facing down. As in the downward shower process, the flow properties of the coating material can influence the thickness of the coating. The factors affecting the flow properties include temperature, fat content, particle size, emulsifier type and content, moisture content, and the melting points of the fats used in the coating material.

In a further example, the packaging sleeve and the shell formed by the inverted shower process may be dipped into a supply of a fat-based liquid material such as liquid chocolate or liquid caramel to provide a coating on the top rim of the shell. The top rim of the shell may then be dipped into a supply of confectionery sprinkles, ground nuts, cereal, coconut, or pieces of candies, cookies or fruit, such that a shell with decorative appearance and varied flavor is provided.

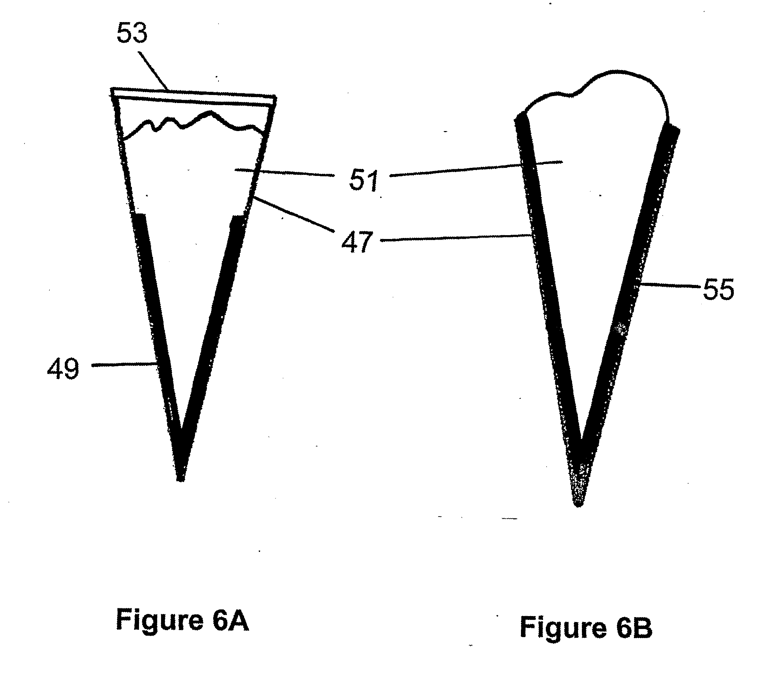

The inverted shower process is particularly advan-tageous in that it enables making attractive ball-top cones that are made with a chocolate or other fat-based coating instead of the conventional wafer cone. With the existing chocolate-cone making technology, only flat-top cones may be made such that, as shown in Figure 6A, the uppermost portion of the packaging sleeve 47 is left uncoated by the coating material 49, resulting in an unattractive naked mass of ice cream 51 between the cone and the top lid 53. Advantageously, the inverted shower process enables coating the entire surface of the packaging sleeve or packaging support and therefore allows more visually attractive ball-top cones to be made. Referring to Figure 6B, the chocolate coating 55 extends all the way up to the top of the packaging sleeve 47 and covers the entire inner surface of the packaging sleeve in a ball-top cone made according to the present inverted shower proc ess, and no ice cream filling 51 is exposed onto the packaging sleeve.

Furthermore, the inverted shower process allows inclusion of edible particulates in the coating material during the showering process itself, and therefore enables shells with particulate inclusions to be made in one shower application, without requiring a separate application of the particulates after showering the coating material. Mixing the particulates with the coating material for showering is possible in the inverted shower process, because the nozzle holes used in the inverted shower are relatively larger in diameter compared to the nozzle hole sizes for the downward shower process. Particulate inclusions cannot be mixed with the coating material in the downward shower process because much smaller nozzle holes are used.

The maximum size and percent concentration of the particulates in the coating material will be limited by the size and physical properties of the particulate, as well as the diameter of the nozzle holes. For example, particulates smaller than one third of the diameter of the nozzle hole (e.g., particulates up to 3 mm for nozzle holes with 10 mm diameter) may be used without causing nozzle hole blockage.

The end result of the present invention is a confectionery product comprising a shell filled with a confectionery filling. Suitable decorative or complementary toppings may be introduced, and the shell may further include particulate inclusions. By utilizing the flow properties of the coating composition and the novel shower nozzle, the present method achieves uniform coating coverage of the shell with desired thickness and provides a unique way of producing shells of various shapes that can be filled with confection or frozen confectionery materials. Furthermore, a wider range of coating materials may be incorporated in the present shower method than was possible with the conventional methods, and a shell produced by the shower technique, a cone in particular, will have a distinctive appearance that is appealing to the consumer.

Manufacturers will also appreciate that the present shower technology, which can be conducted at ambient temperatures and eliminates the requirements for chilled or air-dehumidification equipment, is less complex and simpler to operate than the conventional forming process. In this sense, the shower process is more practical than the conventional shell-making processes, as it reduces capital and operational costs. Specifically, when real chocolate is used to form the shell, it will solidify upon cooling to room temperature without requiring refrigeration or the lower temperatures of an ice confection to solidify the shell. These features also enable the shell to be used for other confections, such as marshmallow, fudge, jelly, peanut butter, other chocolate compositions or other confectionery components. Thus, any of a wide range of fillings are suitable for use in this invention although ice confections are preferred.

### EXAMPLES

The following examples further illustrate some of the preferred embodiments of the present application. It should be noted that, although described with reference to specific examples, the invention will be appreciated by those skilled in the art in many other forms and embodiments.

### EXAMPLE 1:

Shower cone recipe for real milk chocolate-based coating (% by weight)

| | |
|---|---|
| Sugar | 44.3 |
| Cocoa liquor | 15 |
| Cocoa butter | 19.5 |
| Whole milk powder | 20 |
| Anhydrous butterfat | 1 |
| Vanillin | 0.05 |
| Lecithin | 0.15 |

### EXAMPLE 2:

Shower cone recipe for vegetable fat-based coating (% by weight)

| | |
|---|---|
| Sugar | 44.5 |
| Cocoa powder | 9 |
| Coconut oil | 28.3 |
| Whole milk powder | 18 |
| Vanillin | 0.05 |
| Lecithin | 0.15 |

### EXAMPLE 3: Milk Chocolate Cone Made by Showering

A radially symmetric shower nozzle consisting of twenty-four holes was used to deliver exactly 6 grams of real chocolate at 33% by weight of fat into an empty 110 mm cone sleeve. The formed milk chocolate cone was then filled with vanilla ice cream and frozen. The end consumer of this product removes the sleeve to reveal a milk chocolate cone novelty filled with ice cream.

Coating recipe (% by weight): sugar 52.1, whole milk powder 12, cocoa liquor 13, cocoa butter 21.4, anhydrous butterfat 1, soy lecithin 0.3, vanilla 0.2.

Total fat content: 33% by weight

Particle size: 24-26 microns

### EXAMPLE 4: Wafer Cone Lined with Real Milk Chocolate Made by Showering

In a manner similar to that of Example 3, real milk chocolate may be showered into a sugar wafer cone. The cone is then filled with ice cream and frozen. Real milk chocolate with only 33% fat will have a unique flavor and texture compared to the high-fat coatings normally used to line ice cream cones.

### EXAMPLE 5: Compound Pig Made by Showering

15 grams of pink colored compound with 32% by weight of fat is showered into a small empty plastic pig. The pig is then filled with pink marshmallow-flavored sherbet and frozen. Optionally, the open top of the pig may be topped with 1 or 2 grams of pink coatings to seal in the sherbet. The consumer removes the outer plastic cover to reveal a pink pig filled with sherbet.

Coating recipe (% by weight): sugar 58.5, non-fat dry milk 6, whey powder 3, coconut oil 31.7, soy lecithin 0.2, PGPR emulsifier 0.1, titanium dioxide 0.1, red 40 lake 0.1, flavor 0.3.
Total fat content: 32% by weight
Particle size: 28-30 microns

### EXAMPLE 6: Milk chocolate shower cone containing small pieces of chopped almonds

A mini cone is made by showering 7 grams of real milk chocolate with 34% by weight of fat into a mini cone sleeve using a nozzle with twenty-four 1-mm diameter holes. 0.8 grams of finely chopped almonds are placed on the particulate applicator. The applicator is then lowered into the cone and spun rapidly at around 100-200 rpm, forcing the inclusions to fly off the applicator into the walls of the cone.

After the particulate application, the cone contains approximately 10% by weight of almonds. The applicator is withdrawn and the cone is filled with 14 grams of ice cream. The top of the ice cream cone may be decorated with more ice cream and/or sauce and/or sprinkles. It may be sprinkled with more particulates such as almonds or chocolate chips.

The incorporation of the particulate inclusions adds further complexity to the flavor of the cone product and imparts crunchy texture.

### EXAMPLE 7: White chocolate shower cone containing chocolate cookie fines

An ice cream cone is made according to the method described in Example (above), but the cone is made with white chocolate containing 35% by weight of fat and the particulate inclusions are chocolate cookie fines. The consumer experiences a more varied flavor and crunchy texture when eating the ice cream cone.

### EXAMPLE 8: Cone composed of alternate vertical lines of milk chocolate and white chocolate

A small cone-shaped paper sleeve is passed under the shower nozzle for a first shower application. 3.5 grams of white chocolate is showered onto the top of the inside of the sleeve through 12 radially arranged holes in the nozzle, placing 12 equal deposits of white chocolate around the top inside surface of the sleeve, separated by 12 equal spaces.

The sleeve then passes under a second shower nozzle, which showers 3.5 grams of milk chocolate onto the top of the inside surface of the sleeve through 12 radially arranged holes. The second nozzles applies 12 equal deposits of milk chocolate into the spaces formed by the first shower application of white chocolate.

The 24 deposits of white and milk chocolate run down to the bottom of the sleeve by gravity and create a cone-shaped shell weighing 7 grams. The cone has alternating vertical bands of white and milk chocolate.

The cone may then be filled with a filling, such as vanilla ice cream. The top of the ice cream cone may be decorated with more ice cream, cream and/or sauce and/or sprinkled with particulates such as sprinkles, almond pieces, candy pieces or chocolate chips. After freezing, the sleeve may be removed to reveal a cone composed of alternating bands of white and milk chocolate.

### EXAMPLE 9: Red, white and blue vegetable fat-based compound cone

A cone-shaped paper sleeve is passed under a first shower nozzle with 8 radially arranged holes for a first shower application. 6 grams of white, vegetable fat-based coating material is showered from the first showered nozzle onto the inside top of the sleeve, placing 8 equal deposits of white coating material around the top of the sleeve, separated by 8 equal spaces.

The sleeve then passes under a second shower nozzle with 8 radially arranged holes, through which 6 grams of red coating material is showered onto the top of the inside surface of the sleeve. 8 equal deposits of red coating material are placed around the inside top of the sleeve, in the spaces formed between the white coating deposits from the first showering.

The sleeve then passes under a third shower nozzle with 8 radially arranged holes, through which 6 grams of blue coating material is showered onto the top of the inside surface of the sleeve. 8 equal deposits of blue coating material are placed around the inside top of the sleeve, in the spaces formed between the white and red coatings deposited by the first and second shower nozzles.

The 24 deposits of the coating material run down to the bottom of the sleeve by gravity and create a cone-shaped shell of 18 grams in weight.

The cone is then filled with cheesecake flavored frozen yogurt rippled with cherry sauce, and the top of the cone is decorated with small pieces of graham cracker.

After freezing, the cone sleeve may be removed to reveal a cone composed of alternating vertical bands of red, white and blue coating.

### EXAMPLE 10: Milk chocolate cone decorated with irregular horizontal lines composed of white chocolate

0.8 grams of white chocolate coating (with 38% fat by weight) is first applied onto the interior of an empty mini cone sleeve such that the white chocolate coating forms irregular horizontal lines on the inside wall of the sleeve. 7 grams of real milk chocolate (34% fat) is then showered onto the mini cone sleeve through a nozzle with 24 holes with 1 mm diameter.

The sleeve is then filled with vanilla ice cream. The top of the ice cream may be decorated with more ice cream, cream and/or sauce, and/or sprinkled with particulates such as almond pieces or chocolate chips. After freezing, the cone sleeve may be removed to reveal a milk chocolate cone decorated with irregular horizontal lines of white chocolate.

### EXAMPLE 11: White vegetable fat-based compound cone decorated with speckles composed of dark brown vegetable fat-based compound coating

A cone is made according to Example 10 except that the cone is made with a white compound coating (35% fat) and the decoration is made with a dark cocoa flavored vegetable fat-based compound coating (45% fat). The dark cocoa flavored compound coating is applied onto the empty mini cone sleeve such that speckles are formed on the inner wall of the sleeve. After freezing, removal of the cone sleeve reveals a white cone decorated with dark brown speckles.

## Claims

1. A method for producing an edible fat-based shell, which comprises:
preparing a packaging support in a desired shape that defines a volume therein; and
directly showering or pouring an amount of an edible shell-forming composition on the packaging support (17, 47), which composition solidifies to form a shell (7, 8, 33, 37) of consistent thickness thereon, **characterized in that** the composition comprises one or more fats and has a plastic viscosity of about 1 to 4 Pa*s and a yield value of about 5 to 25 Pa during the showering or pouring.

2. The method of claim 1, wherein the shell is formed from an amount of shell-forming composition that is equivalent to what is required for formation of the shell (7, 8, 33, 37).

3. The method of claim 1, wherein the shell (7, 8, 33, 37) has the shape of a cup, cone, or other open top receptacle and which further comprises providing a filling that is at least partially retained within or completely fills the shell.

4. The method of claim 3, wherein the filling (13,51) is a confectionery or an ice confection.

5. The method of claim 3, wherein the filling (13, 51) is an ice confection comprising ice cream, frozen yogurt, sherbet, or water ice and is present in an amount that extends beyond the open top of the shell (7, 8) so as to be provided as an exposed mass for easy consumption.

6. The method of claim 1, wherein the composition further comprises an emulsifier in an amount of no more than 1% by weight of the composition and a sweetener, with the emulsifier comprising lecithin, ammonium phosphatide, polyglyceryl polyricinoleate, citric acid ester of mono-glycerides, or combinations thereof and the sweetener comprising sugar, dried honey, corn syrup solids, lactose, anhydrous dextrose, malitol, xylitol, lactitol, mannitol, polydextrose, acesulfame K, sucralose, aspartame, or combinations thereof.

7. The method of claim 1, wherein the packaging support (17, 47) and shell (7, 8, 33, 37) are each formed as a cone.

8. The method of claim 7, wherein the shell (7, 33, 37) is formed with an irregular top rim (21, 27, 31).

9. The method of claim 8, wherein the shell (7, 33, 37) is formed with an angled, offset or crenelated top rim (21, 27, 31).

10. The method of claim 1, which further comprises providing inclusions on an inner surface of the shell (7, 8), with the inclusions comprising nuts, cookie crumbs, cereal, fruit pieces, chocolate chips, candy pieces or coconut.

11. The method of claim 1, wherein the packaging support (17, 47) is a non-absorptive food grade material comprising paper, foil, transparent, translucent or non-transparent plastic, or a laminate thereof.

12. The method of claim 1, wherein the composition is showered from a plurality of streams (5, 19) onto the packaging support (17, 47).

13. The method of claim 12, wherein the plurality of streams (5, 19) are arranged to provide a uniform top rim (31) of the shell which is essentially horizontal or essentially uniformly crenelated.

14. The method of claim 12, wherein the plurality of streams (5, 19) are uniformly arranged about an imaginary vertical center line (23) of the shell (7, 8, 33, 37).

15. The method of claim 12, wherein at least one of the plurality of streams (19) is offset from an imaginary vertical center line (23) of the shell so a non-uniform top rim (27) of the shell which is angled, slanted, or double-slanted is provided.

16. The method of claim 1 which further comprises embedding a cake or wafer cone within the shell during the showering.

17. The method of claim 1, wherein the shell-forming composition is sprayed onto the packaging support (17, 47) while the support is held in a downwardly open position.

18. The method of claim 17, which further comprises dipping the open end of the packaging support (17, 47) and shell (7, 8, 33, 37) into a supply of a fat-based liquid material to provide a coating on the top rim of the support and shell, wherein the fat-based liquid material is liquid chocolate or liquid caramel.

19. The method of claim 18, which further comprises dipping the open end of the packaging support (17, 47) and shell (7, 8, 33, 37) into a supply of nuts, cookie crumbs, cereal, fruit pieces, chocolate chips, candy pieces or coconut after dipping into the fat-based liquid material.

20. The method of claim 1, which further comprises showering edible shell-forming compositions of different colors to form a shell with vertical bands of different colors.

21. The method of claim 1, which further comprises forming decorative lines (35), patterns or speckles (39) on an outer surface of the shell (33, 37).

## Patentansprüche

1. Verfahren zur Herstellung einer verzehrbaren Hülle auf Fettgrundlage, das aufweist:
Herstellen eines Verpackungshüllen-Trägers in einer gewünschten Form, die ein innen liegendes Volumen begrenzt; und
direktes Rieseln oder Gießen einer Menge einer verzehrbaren, hüllenbildenden Zusammensetzung auf den Verpackungshüllen-Träger (17,47), wobei sich die Zusammensetzung verfestigt, um darauf eine Hülle (7,8,33,37) mit einer gleichmäßigen Dicke zu bilden, **dadurch gekennzeichnet, dass** die Zusammensetzung ein oder mehrere Fette aufweist und eine plastische Viskosität von etwa 1 bis 4 Pa*s und eine Fließgrenze von etwa von 5 bis 25 Pa während des Rieselns oder Gießens hat.

2. Verfahren nach Anspruch 1, wobei die Hülle aus einer Menge der hüllenbildenden Zusammensetzung gebildet wird, die der entspricht, die für die Bildung der Hülle (7,8,33,37) erforderlich ist.

3. Verfahren nach Anspruch 1, wobei die Hülle (7,8,33,37) die Form eines Bechers, eines Konus oder eines anderen oben offenen Aufnahmegefäßes hat, und das ferner das Bereitstellen einer Füllung aufweist, die zumindest teilweise in der Hülle aufgenommen wird oder die Hülle vollständig füllt.

4. Verfahren nach Anspruch 3, wobei die Füllung (13,51) eine Süßware oder ein Eiskonfekt ist.

5. Verfahren nach Anspruch 3, wobei die Füllung (13,51) ein Eiskonfekt ist, das Eiscreme, gefrorenen Joghurt, Sorbet oder Wassereis aufweist und in einer Menge vorliegt, die sich über die obere Öffnung der Hülle (7,8) erstreckt, um als exponierte Masse zum leichten Verzehr bereitgestellt zu sein.

6. Verfahren nach Anspruch 1, wobei die Zusammensetzung ferner einen Emulgator in einer Menge von nicht mehr als 1 Gew.-% der Zusammensetzung und einen Süßstoff aufweist, wobei der Emulgator Lecithin, Ammoniumphosphatid, Polyglyceryl-Polyricinoleat, Zitronensäure-Ester aus Monoglyceriden oder Kombinationen davon aufweist, und wobei der Süßstoff Zucker, getrockneter Honig, Maissirup-Festsstoffe, Laktose, Dextrose-Anhydrid, Maltitol, Xylitol, Laktitol, Mannitol, Polydextrose, Acesulfam K, Sucralose, Aspartam oder Kombinationen davon aufweist.

7. Verfahren nach Anspruch 1, wobei der Verpackungshüllen-Träger (17,47) und die Hülle (7,8,33,37) jeweils als ein Konus geformt sind.

8. Verfahren nach Anspruch 7, wobei die Hülle (7,8,33,37) mit einem unregelmäßigen oberen Rand (21,27,31) ausgebildet ist.

9. Verfahren nach Anspruch 8, wobei die Hülle (7,8,33,37) mit einem winkelförmig versetzten oder gezinnten oberen Rand (21,27,31) ausgebildet ist.

10. Verfahren nach Anspruch 1, ferner umfassend das Bereitstellen von Einschlüssen an einer inneren Oberfläche der Hülle (7,8), wobei die Einschlüsse Nüsse, Kekskrümel, Cerealien, Fruchtstücke, Schokoladenchips, Süßigkeitenstücke oder Kokosnuss aufweisen.

11. Verfahren nach Anspruch 1, wobei der Verpackungshüllen-Träger (17,47) ein nicht absorptionsfähiges, lebensmittelunbedenkliches Material ist, das Papier, Folie, einen transparenten, transluzenten oder nicht transparenten Kunststoff oder ein Laminat davon aufweist.

12. Verfahren nach Anspruch 1, wobei die Zusammensetzung aus einer Vielzahl von Strahlen (5,19) auf den Verpackungshüllen-Träger (17,47) genieselt wird.

13. Verfahren nach Anspruch 12, wobei die Vielzahl der Strahlen (5,19) so angeordnet ist, dass ein gleichförmiger oberer Rand (31) der Hülle bereitgestellt wird, der im Wesentlichen horizontal oder im Wesentlichen gleichförmig gezinnt verläuft.

14. Verfahren nach Anspruch 12, wobei die Vielzahl der Strahlen (5,19) gleichmäßig um eine imaginäre vertikale Mittellinie (23) der Hülle (7,8,33,37) angeordnet ist.

15. Verfahren nach Anspruch 12, wobei zumindest einer aus der Vielzahl der Strahlen (19) von einer imaginären vertikalen Mittellinie (23) der Hülle abgesetzt ist, so dass ein nicht gleichförmiger oberer Rand (27) der Hülle, der eckig, abgeschrägt oder beidseitig abgeschrägt ist, bereitgestellt wird.

16. Verfahren nach Anspruch 1, das ferner das Einbetten eines Kuchen- oder Waffelkonus innerhalb der Hülle während des Rieselns aufweist.

17. Verfahren nach Anspruch 1, wobei die hüllenbildende Zusammensetzung auf den Verpackungshüllen-Träger (17,47) gesprüht wird, während der Träger in einer nach unten weisenden offenen Position gehalten wird.

18. Verfahren nach Anspruch 17, das ferner das Eintauchen des offenen Endes des Verpackungshüllen-Trägers (17,47) und der Hülle (7,8,33,37) in eine Bereitstellung eines flüssigen Materials auf Fettgrundlage aufweist, um ein Beschichten an dem oberen Rand des Trägers und der Hülle bereitzustellen, wobei das flüssige Material auf Fettgrundlage flüssige Schokolade oder flüssiges Karamell ist.

19. Verfahren nach Anspruch 18, das ferner das Eintauchen des offene Endes des Verpackungshüllen-Trägers (17,47) und der Hülle (7,8,33,37) in ein Reservoir an Nüssen, Kekskrümeln, Cerealien, Fruchtstücken, Schokoladenchips, Süßigkeitenstücke oder Kokosnuss nach dem Eintauchen in das flüssige Material auf Fettgrundlage aufweist.

20. Verfahren nach Anspruch 1, das ferner das Rieseln von verzehrbaren Hüllen - bildenden Zusammensetzungen mit verschiedenen Farben aufweist, um eine Hülle mit vertikalen Streifen verschiedener Farben auszubilden.

21. Verfahren nach Anspruch 1, das ferner das Ausbilden von dekorativen Linien (35), Mustern oder Flecken (39) an einer äußeren Oberfläche der Hülle (33, 37) aufweist.

## Revendications

1. Procédé pour produire un enrobage comestible à base de matière grasse, qui comprend les étapes consistant à :
- préparer un support d'emballage dans une forme souhaitée qui définit un volume à l'intérieur ; et
- asperger ou verser directement une quantité d'une composition comestible formant enrobage sur le support d'emballage (17, 47), laquelle composition se solidifie pour former un enrobage (7, 8, 33, 37) d'épaisseur constante sur celui-ci,
**caractérisé en ce que** la composition comprend une ou plusieurs matières grasses et a une viscosité plastique d'environ 1 à 4 Pa*s et une valeur résultante d'environ 5 à 25 Pa pendant l'action d'asperger ou verser.

2. Procédé selon la revendication 1,
dans lequel l'enrobage est formé à partir d'une quantité d'une composition formant enrobage qui est équivalente à ce qui est requis pour la formation de l'enrobage (7, 8, 33, 37).

3. Procédé selon la revendication 1,
dans lequel l'enrobage (7, 8, 33, 37) a la forme d'une coupelle, cône, ou autre récipient ouvert sur le haut et qui en outre comprend l'étape consistant à fournir une garniture qui est retenue au moins partiellement à l'intérieur de ou qui remplit complètement l'enrobage.

4. Procédé selon la revendication 3,
dans lequel la garniture (13, 51) est une confiserie ou une confiserie glacée.

5. Procédé selon la revendication 3,
dans lequel la garniture (13, 51) est une confiserie glacée comprenant une crème glacée, yogourt congelé, ou sorbet et est présente dans une quantité qui dépasse le dessus ouvert de l'enrobage (7, 8) de façon à être proposée comme une masse découverte pour une consommation facile.

6. Procédé selon la revendication 1,
dans lequel la composition comprend en outre un émulsifiant dans une quantité ne dépassant pas 1 % du poids de la composition et un édulcorant,
l'émulsifiant comprenant lécithine, ammonium phosphate, polyricinolénate de polyglycérol, ester d'acide citrique de mono-glycéride ou des combinaisons de ceux-ci et
l'édulcorant comprenant sucre, miel séché, masse de sirop de maïs, lactose, dextrose anhydre, malitol, xylitol, lactitol, mannitol, polydextrose, acésulfame K, sucralose, aspartame, ou des combinaisons de ceux-ci.

7. Procédé selon la revendication 1,
dans lequel le support d'emballage (17, 47) et l'enrobage (7, 8, 33, 37) sont formés chacun comme un cône.

8. Procédé selon la revendication 7,
dans lequel l'enrobage (7, 33, 37) est formé avec une couronne supérieure (21, 27, 31) irrégulière.

9. Procédé selon la revendication 8,
dans lequel l'enrobage (7, 33, 37) est formé avec une couronne supérieure (21, 27, 31) repliée, décalée ou crénelée.

10. Procédé selon la revendication 1,
qui comprend en outre la fourniture d'inclusions sur une surface intérieure de l'enrobage (7, 8), les inclusions comprenant des fruits à coque, des miettes de biscuit, une céréale, des morceaux de fruits, des éclats de chocolat, des morceaux de bonbon ou de sucre ou de la noix de coco.

11. Procédé selon la revendication 1,
dans lequel le support d'emballage (17, 47) est une matière non absorbante classée comme aliment comprenant du papier, une feuille de métal, du plastique transparent, translucide ou non-transparent, ou un stratifié de ces matières.

12. Procédé selon la revendication 1,
dans lequel la composition est aspergée à partir d'une pluralité de jets (5, 19) sur le support d'emballage (17, 47).

13. Procédé selon la revendication 12,
dans lequel la pluralité de jets (5, 19) est agencée pour fournir une couronne supérieure (31) uniforme de l'enrobage qui est essentiellement horizontale ou essentiellement uniformément crénelée.

14. Procédé selon la revendication 12,
dans lequel la pluralité de jets (5, 19) est agencée uniformément autour d'une ligne centrale verticale imaginaire (23) de l'enrobage (7, 8, 33, 37).

15. Procédé selon la revendication 12,
dans lequel au moins un parmi la pluralité de jets (19) est décalé par rapport à la ligne centrale verticale imaginaire (23) de l'enrobage de façon à fournir une couronne supérieure (27) non uniforme de l'enrobage qui est repliée, inclinée, ou doublement inclinée.

16. Procédé selon la revendication 1,
qui comprend en outre l'incrustation d'un gâteau ou pâtisserie ou d'un cône en gaufrette à l'intérieur de l'enrobage pendant l'action d'asperger.

17. Procédé selon la revendication 1,
dans lequel la composition formant enrobage est pulvérisée ou vaporisée sur le support d'emballage (17, 47) pendant que le support est maintenu dans une position ouverte vers le bas.

18. Procédé selon la revendication 17,
qui comprend en outre l'étape consistant à plonger l'extrémité ouverte du support d'emballage (17, 47) et de l'enrobage (7, 8, 33, 37) dans une quantité ou stock de matière liquide à base de matière grasse pour fournir un enrobage sur la couronne supérieure du support et de l'enrobage, la matière liquide à base de matière grasse étant du chocolat liquide ou du caramel liquide.

19. Procédé selon la revendication 18,
qui comprend en outre l'étape consistant à plonger l'extrémité ouverte du support d'emballage (17, 47) et de l'enrobage (7, 8, 33, 37) dans une quantité ou stock de fruits à coque, de miettes de biscuit, de céréale, de morceaux de fruits, d'éclats de chocolat, de morceaux de bonbon ou de sucre, ou de noix de coco après l'étape consistant à plonger dans la matière liquide à base de matière grasse.

20. Procédé selon la revendication 1,
qui comprend en outre une étape consistant à asperger des compositions comestibles formant enrobage de différentes couleurs pour former un enrobage à bandes verticales de différentes couleurs.

21. Procédé selon la revendication 1,
qui comprend en outre une étape consistant à former des lignes (35), motifs, taches ou mouchetures (39) décoratifs sur une surface extérieure de l'enrobage (33, 37).
